Europäisches Patentamt

(19) European Patent Office

Office européen des brevets

(11) Veröffentlichungsnummer: **0 048 877**
**B1**

(12) # EUROPÄISCHE PATENTSCHRIFT

(45) Veröffentlichungstag der Patentschrift:
12.12.84

(21) Anmeldenummer: 81107213.1

(22) Anmeldetag: 12.09.81

(51) Int. Cl.³: **C 08 G 12/12,** C 08 L 97/02,
C 09 J 3/16

(54) Verfahren zur Herstellung von Harnstoff-Formaldehyd-Harz-Leimen.

(30) Priorität: 01.10.80 DD 224249

(43) Veröffentlichungstag der Anmeldung:
07.04.82 Patentblatt 82/14

(45) Bekanntmachung des Hinweises auf die Patenterteilung:
12.12.84 Patentblatt 84/50

(84) Benannte Vertragsstaaten:
BE DE FR SE

(56) Entgegenhaltungen:
EP - A - 0 013 447
DE - A - 2 655 327
DE - B - 1 420 491
DE - B - 2 334 380
DE - C - 906 016
FR - A - 2 199 543
GB - A - 1 480 787

CHEMICAL ABSTRACTS, Band 74, Nr. 8, 22. Februar
1971, Seite 20, Nr. 32245c Columbus, Ohio, U.S.A. S.A.
MACIASZEK: "Condensation of urea-formaldehyde
resins at elevated temperature"

(73) Patentinhaber: VEB Leuna-Werke "Walter Ulbricht",
DDR-4220 Leuna 3 (DD)

(72) Erfinder: Barse, Joachim, Block 467/3,
DDR-4090 Halle-Neustadt (DD)
Erfinder: Drechsel, Henry, Dr., Menckestrasse 16,
DDR-7000 Leipzig (DD)

(72) Erfinder: Esser, Gerhard, Dr., Lilienweg 2,
DDR-4220 Leuna (DD)
Erfinder: Findeisen, Gerhard, Dipl.-Chem.,
Gaussstrasse 1, DDR-4220 Leuna (DD)
Erfinder: Hammer, Lothar, Block 034/8,
DDR-4090 Halle-Neustadt (DD)
Erfinder: Kunath, Gerhard, Dipl.-Chem.,
Windmühlenstrasse 8, DDR-4220 Leuna (DD)
Erfinder: Mittag, Lisa, Dr., Kleiststrasse 71,
DDR-7000 Leipzig (DD)
Erfinder: Müller, Heinz, Dr., Nelkenweg 6,
DDR-4220 Leuna (DD)
Erfinder: Neumann, Rainer, Dr., Nelkenweg 1,
DDR-4220 Leuna (DD)
Erfinder: Oehler, Kurt, Dr., Block 201/4/13,
DDR-4090 Halle-Neustadt (DD)
Erfinder: Peinze, Konrad, Dipl.-Chem., Gartenweg 1,
DDR-4220 Leuna (DD)
Erfinder: Petz, Annelies, Block 398/2,
DDR-4090 Halle-Neustadt (DD)
Erfinder: Raue, Gudrun, Dr., Rathenau-Strasse 14,
DDR-4200 Merseburg (DD)
Erfinder: Steinke, Ulrich, Dr., Karl-Schurz-Strasse 2,
DDR-4020 Halle (DD)
Erfinder: Ulrich, Katerina, Reinhold-Fritz-Strasse 3,
DDR-4203 Bad Dürrenberg (DD)
Erfinder: Winter, Harald, Dr., Windmühlenstrasse 10,
DDR-4220 Leuna (DD)

(74) Vertreter: Puchberger, Rolf, Dipl. Ing. et al,
Patentanwälte, Dipl. Ing. Georg Puchberger Dipl. Ing.
Rolf Puchberger Dipl. Ing. Peter Puchberger
Singerstrasse 13 Postfach 55, A-1010 Wien (AT)

Anmerkung: Innerhalb von neun Monaten nach der Bekanntmachung des Hinweises auf die Erteilung des europäischen
Patents im Europäischen Patentblatt kann jedermann beim Europäischen Patentamt gegen das erteilte europäische Patent
Einspruch einlegen. Der Einspruch ist schriftlich einzureichen und zu begründen. Er gilt erst als eingelegt, wenn die
Einspruchsgebühr entrichtet worden ist (Art. 99(1) Europäisches Patentübereinkommen).

## Beschreibung

Die Erfindung betrifft ein Verfahren zur Herstellung von Harnstoff-Formaldehyd-Harz-Leimen für die Gewinnung von Holzwerkstoffen mit extrem niedriger Formaldehydemission durch eine ein Zwischenprodukt bildende Kondensation von Harnstoff und Formaldehyd.

Die übliche Herstellungsweise für Harnstoff-Formaldehyd-Harze beruht darauf, daß Harnstoff mit Formaldehyd in wässeriger Lösung bei einem pH-Wert über 7 vorkondensiert, anschließend im sauren Medium weiterkondensiert und nach Einstellen eines schwach basischen Mediums unter Zusatz von weiterem Harnstoff nachkondensiert wird. Die so erhaltene Harzlösung wird dann unter vermindertem Druck auf einen Festharzgehalt von 60—70% aufkonzentriert (Ullmann, Encyklopädie der Technischen Chemie, 4. Auflage, Bd. 7, S. 403 ff.). Die Herstellung kann diskontinuierlich oder kontinuierlich erfolgen. Ein kontinuierliches Herstellungsverfahren wird in der DE-PS 88 196 beschrieben. Die für die Spanplattenherstellung verwendeten Harnstoff-Formaldehyd-Harz-Leime besitzen im allgemeinen ein Molverhältnis von Formaldehyd zu Harnstoff über 1,3, insbesondere zwischen 1,4 und 1,7. Bei derartigen Leimharzen ist jedoch von Nachteil, daß bei ihrer Verarbeitung viel Formaldehyd abgespalten wird und daraus hergestellte Holzwerkstoffe relativ viel Formaldehyd abgeben. Neben den dadurch bedingten Geruchsbelästigungen können Gesundheitsschädigungen eintreten. Die Verminderung der Formaldehydabgabe von Holzwerkstoffen ist daher eine zwingende Notwendigkeit. So ist es bekannt, durch Kondensation von Harnstoff und Formaldehyd in Gegenwart von Ammoniak Leime mit verringerter Formaldehydabspaltung herzustellen (DD-PS 122 391). Allerdings sind nach diesem Verfahren Leime mit extrem niedriger Formaldehydabspaltung nicht herstellbar. Nachteilig ist ferner, daß durch die Kondensation in Gegenwart von Ammoniak andere Leimeigenschaften negativ beeinflußt werden.

Es ist weiterhin bekannt, die Formaldehydabgabe von Spanplatten dadurch zu verringern, daß auf die Holzspäne vor Zugabe des Bindemittels eine wässerige Dispersion gesprüht wird, die in der wässerigen Phase wasserverträgliche Mittel zur Bindung von Formaldehyd und als disperse Phase ein Wachs und/oder ein in Wasser unlösliches dispergierbares Polymerisat enthält (DE-AS 2 740 207). Nachteilig bei dieser Arbeitsweise ist, daß zusätzliche technische Einrichtungen für die gesonderte Aufbringung des formaldehydbindenden Zusatzes auf die Späne erforderlich sind. Außerdem werden die mechanischen Eigenschaften der Spanplatten durch diesen Zusatz negativ beeinflußt.

Schließlich ist bekannt, die Formaldehydabgabe von Spanplatten dadurch zu vermindern, daß durch die fertiggepreßten Spanplatten bei 313 bis 373° K Ammoniak gesaugt wird (DE-OS 2 804 514). Nachteilig ist hierbei, daß bei der Spanplattenherstellung eine technisch aufwendige zusätzliche Verfahrensstufe benötigt wird und ein zusätzlicher Energieaufwand erforderlich ist.

Ziel der Erfindung ist ein einfaches Verfahren zur Herstellung von Harnstoff-Formaldehyd-Harz-Leimen, die gute mechanische Eigenschaften aufweisen und bei deren Verarbeitung gegenüber herkömmlichen aminoplastischen Bindemitteln wesentlich weniger Formaldehyd freigesetzt wird.

Es bestand die Aufgabe, ein Verfahren zu entwickeln, das die Herstellung von extrem formaldehydarmen Harnstoff-Formaldehyd-Harz-Leimen gestattet.

Diese Aufgabe wird erfindungsgemäß dadurch gelöst, daß man Harnstoff und Formaldehyd in wässeriger Lösung in Gegenwart von 0,05 bis 0,5% organischen oder anorganischen Säuren, bezogen auf die eingesetzte Harnstoffmenge, unter Aufrechterhaltung eines Kohlendioxiddrucks von 1 bis $4 \cdot 10^5$ Pa so lange kondensiert, bis mindestens 40% des eingesetzten Formaldehyds in Form von Methylenbrücken gebunden vorliegen und dieses Zwischenprodukt im neutralen oder schwach alkalischen Bereich nach Zugabe von Harnstoff bis zu einem Molverhältnis von Harnstoff zu Formaldehyd von 1 : 0,9 bis 1 : 1,3 weiterkondensiert und gegebenenfalls gleichzeitig aufkonzentriert. Es ist günstig, wenn der Harnstoff-Formaldehyd-Harz-Leim eine Viskosität von 400 bis 1000 mPa·s aufweist. Das Wesen der Erfindung liegt darin, durch Anwendung spezifischer Reaktionsbedingungen den Kondensationsablauf im Molverhältnis Harnstoff zu Formaldehyd 1 : 1,8 bis 1 : 2,1 so zu steuern, daß mindestens 40% des eingesetzten Formaldehyds in Form von Methylenbrücken gebunden sind. Erst die Bildung von Harzstrukturen mit Methylenbrückengehalten größer 40% gestattet die Weiterkondensation im Molverhältnis Harnstoff zu Formaldehyd von 1 : 0,9 bis 1 : 1,3 unter Vermeidung von negativen Auswirkungen auf die Leimeigenschaften. Die spezifischen Kondensationsbedingungen im Molverhältnis 1 : 1,8 bis 1 : 2,1 sind charakterisiert durch die Anwendung einer Kohlendioxid-Atmosphäre bei Drücken von $1—4 \cdot 10^5$ Pa und Temperaturen von 373 bis 413° K. Durch die Kombination dieser Kondensationsbedingungen mit der Weiterkondensation im Molverhältnis Harnstoff zu Formaldehyd von 1 : 0,9 bis 1 : 1,3 werden überraschenderweise Harnstoff-Formaldehyd-Harze mit extrem niedriger Formaldehydabspaltung erhalten.

Dem Fachmann ist erfahrungsgemäß bekannt, daß es grundsätzlich möglich ist, durch Verringerung des Molverhältnisses von Harnstoff zu Formaldehyd die Formaldehydabspaltung von Harnstoff-Formaldehyd-Leimen zu erniedrigen bei gleichzeitiger Abnahme der Lagerstabilität und Reaktivität sowie einer Verschlechterung der mechanischen Werte der daraus hergestellten Holzwerkstoffe. Wegen dieser negativen Auswirkung sind der Verringerung des Molverhältnisses Grenzen gesetzt. Es war daher überraschend und nicht vorherzusehen, daß es bei Anwendung der erfindungsgemäßen Kondensationsbedingungen möglich ist, das Molverhältnis gegenüber dem bekannten Stand weiter zu verringern, ohne daß die genannten Auswirkungen unvertretbar groß werden.

0 048 877

Vergleichsbeispiel

## Beispiel 1

In ein Reaktionsgefäß, das mit Standregelung und Rührvorrichtung versehen ist, wird eine Harnstoff-Formalin-Lösung, die auf 972 Gew.-Teile Lösung 700 Gew.-Teile 37%iges neutralisiertes Formalin und 272 Gew.-Teile Harnstoff enthält, mit einer Geschwindigkeit von 100 Gew.-Teilen/h dosiert. Gleichzeitig werden in das Rührgefäß 0,5 Gew.-Teile pro Stunde 10%ige Ameisensäure gegeben. Im Reaktionsgefäß wird eine Temperatur von 403° K und mit gasförmigem Kohlendioxid ständig ein Druck von $3 \cdot 10^5$ Pa eingehalten. Im Verlauf von einer Stunde werden 100 Gew.-Teile dieses Kondensats, das unter diesen Bedingungen einen Methylenbrückengehalt, bezogen auf den eingesetzten Formaldehyd, von 42,3% aufweist, in ein zweites Reaktionsgefäß geführt, dem 29,2 Gew.-Teile/h einer 70%igen wässerigen Harnstofflösung und 0,34 Gew.-Teile/h einer 10%igen Natronlauge zudosiert werden. In diesem zweiten Reaktionsgefäß, das mit einer Umwälzvorrichtung ausgestattet ist, wird bei einer Temperatur von 323—343° K unter vermindertem Druck weiterkondensiert und gleichzeitig auf einen Festharzgehalt von 67% aufkonzentriert. Der kontinuierlich abgeführte Harnstoff-Formaldehyd-Leim mit einer Viskosität von 560 mPa·s/293° K ist lagerstabil und besonders zur Herstellung von Spanplatten mit extrem niedriger Formaldehydabspaltung geeignet (Fesyp-Wert 0,008).

## Beispiel 2

In 400 Gew.-Teilen 37%igem, neutralisiertem Formalin werden in einem heiz- und kühlbaren Reaktionsgefäß, das mit Rührvorrichtung und Temperaturanzeige ausgerüstet ist, 151,8 Gew.-Teile Harnstoff gelöst und 1,1 Gew.-Teile einer 3%igen Salzsäure zugegeben. Nach dem Verschließen des Reaktionsgefäßes wird mit gasförmigem Kohlendioxid ein Druck von $2,5 \cdot 10^5$ Pa eingestellt und im weiteren Verlauf der Reaktion ständig bei $2,5 \cdot 10^5$ Pa gehalten. Innerhalb von einer Stunde wird der Inhalt des Reaktionsgefäßes auf 396° K erwärmt und so lange kondensiert, bis 40,9% des eingesetzten Formaldehyds in Form von Methylenbrücken vorliegt. Nach Angabe von 3,5 Gew.-Teilen 10%iger Natronlauge wird auf 353° K abgekühlt, 94,9 Gew.-Teile Harnstoff zugegeben und 30 Minuten bei dieser Temperatur weiterkondensiert. Nach der Aufkonzentrierung bei 323° K und $4 \cdot 10^3$ Pa wird ein Harnstoff-Formaldehyd-Leim mit einer Viskosität von 620 mPa·s/293° K und einem Festharzgehalt von 67,5% erhalten.

## Beispiel 3

In ein mit Standregelung versehenes Rührgefäß wird kontinuierlich eine Lösung, die auf 1124 Gew.-Teile 809 Gew.-Teile neutralisiertes 37%iges Formalin und 315 Gew.-Teile Harnstoff enthält, mit einer Geschwindigkeit von 100 Gew.-Teilen/h dosiert. Gleichzeitig werden in das Rührgefäß 0,9 Gew.-Teile/h 10%ige Ameisensäure hinzugegeben. Im Reaktionsgefäß werden ständig eine Temperatur von 393° K und mit gasförmigem Kohlendioxid ein Druck von $2,5 \cdot 10^5$ Pa eingehalten. Im Verlauf von einer Stunde werden 100 Gew.-Teile des Kondensats, das unter diesen Bedingungen einen Methylenbrückengehalt, bezogen auf den eingesetzten Formaldehyd, von 46,2% aufweist, in ein zweites Reaktionsgefäß geführt, dem 37,4 Gew.-Teile/h einer 75%igen wässerigen Harnstofflösung und 0,56 Gew.-Teile/h einer 10%igen Natronlauge zudosiert werden. In diesem zweiten Reaktionsgefäß, das mit einer Umwälzvorrichtung ausgestattet ist, wird bei einer Temperatur von 323 bis 343° K unter vermindertem Druck weiterkondensiert und gleichzeitig auf einen Festharzgehalt von 67% aufkonzentriert. Der kontinuierlich abgeführte Harnstoff-Formaldehyd-Leim mit einer Viskosität von 470 mPa·s/293° K ist lagerstabil und besonders zur Herstellung von Spanplatten mit extrem niedriger Formaldehydabspaltung geeignet (Fesyp-Wert 0,005).

## Beispiel 4

In der folgenden Tabelle sind Lagerstabilitäten und anwendungstechnische Kennwerte eines herkömmlichen Leimes den Werten von erfindungsgemäßen Leimen gegenübergestellt.

3

0 048 877

| Eigenschaften | Herkömmliche Leime | Erfindungsgemäße Leime Beispiele | | |
|---|---|---|---|---|
| | | 1 | 2 | 3 |
| Gelierzeit bei 373° K in sec | 170—180 | 168 | 154 | 173 |
| Wasserverträglichkeit bei 293° K | 1 : 2,3 | 1 : 2,1 | 1 : 2,2 | 1 : 2,5 |
| Lagerstabilität bei 293° K | 2 Monate | 2 Monate | 2 Monate | 2 Monate |
| Abgespaltener Formaldehyd*) aus Spanplatte | 0,025—0,020 | 0,008 | 0,015 | 0,005 |

*) Die Menge des abgespaltenen Formaldehyds wurde nach Ergänzungen British Standard 1811, Part 2, 1969, veröffentlicht am 31. Oktober 1973, bestimmt.

Die Angaben zum abgespaltenen Formaldehyd aus Spanplatten zeigen deutlich den Vorteil der nach dem erfindungsgemäßen Verfahren hergestellten Leime.

**Patentansprüche**

1. Verfahren zur Herstellung von Harnstoff-Formaldehyd-Harz-Leimen für die Gewinnung von Holzwerkstoffen mit extrem niedriger Formaldehydemission durch eine ein Zwischenprodukt bildende Kondensation von Harnstoff und Formaldehyd im Molverhältnis von 1 : 1,8 bis 1 : 2,1 bei Temperaturen von 373 bis 414° K und Überführung dieser Kondensate in an sich bekannter Weise in Leimharze, dadurch gekennzeichnet, daß man Harnstoff und Formaldehyd in wässeriger Lösung in Gegenwart von 0,05 bis 0,5% organischen oder anorganischen Säuren, bezogen auf die eingesetzte Harnstoffmenge, unter Aufrechterhaltung eines Kohlendioxiddrucks von 2 bis $4 \cdot 10^5$ Pa so lange kondensiert, bis mindestens 40% des eingesetzten Formaldehyds in Form von Methylenbrücken gebunden vorliegen, und dieses Zwischenprodukt im neutralen oder schwach alkalischen Bereich nach Zugabe von Harnstoff bis zu einem Molverhältnis von Harnstoff zu Formaldehyd von 1 : 0,9 bis 1 : 1,3 weiterkondensiert und gegebenenfalls gleichzeitig aufkonzentriert.

2. Verfahren nach Anspruch 1, dadurch gekennzeichnet, daß der Harnstoff-Formaldehyd-Harz-Leim eine Viskosität von 400 bis 1000 mPa · s/293° K aufweist.

**Claims**

1. Method for preparing urea-formaldehyde resin based adhesives for gaining wood material having an extremely low formaldehyde emission, by an intermediate product forming condensation of urea and formaldehyde in the molar ratio of 1 : 1,8 to 1 : 2,1 at temperatures of 373 to 414° K and conversion of these condensates, in manner known per se, into adhesive resins, characterized in that one condenses urea and formaldehyde in aqueous solution in presence of 0,05 to 0,5% organic or anorganic acids, related to the amount of urea used, in maintaining a carbon dioxide pressure of 2 to $4 \cdot 10^5$ Pa that long until at least 40% of the formaldehyde used is bound in form of methylene bridges, and one further condenses this intermediate product in the neutral or low alkalic range after addition of urea up to a molar ratio of urea related to formaldehyde of 1 : 0,9 to 1 : 1,3 and, if desired, concentrates simultaneously.

2. Method according to claim 1, characterized in that the urea-formaldehyde-resin based adhesive has a viscosity of 400 to 1000 mPa · s/293° K.

**Revendications**

1. Procédé de fabrication de colles de résine de formaldéhyde-urée pour la préparation de matériaux dérivés du bois avec une émission extrêmement faible de formaldéhyde par une condensation d'urée et de formaldéhyde à un rapport molaire de 1 : 1,8 à 1 : 2,1 et à des températures de 373 à 414° K pour former un produit intermédiaire, et la transformation de ces condensats, d'une manière connue, en colles de résine caractérisé en ce que l'on condense l'urée et le formaldéhyde dans une solution aqueuse en présence de 0,05 à 0,5% en poids d'acides organiques ou inorganiques, en se rapportant à la masse d'urée utilisée, en maintenant une pression du gaz carbonique de 2 à $4 \cdot 10^5$ Pa jusqu'à ce qu'au moins 40% du formaldéhyde utilisé se trouve lié sous forme de liaisons méthylène et en ce que

4

ce produit intermédiaire est encore condensé dans la zone neutre ou faiblement alcaline après addition d'urée jusqu'à un rapport molaire de l'urée à formaldéhyde de 1 : 0,9 à 1 : 1,3 et, le cas échéant, est simultanément concentré.

2. Procédé selon la revendication 1, caractérisé en ce que la colle de résine formaldéhyde-urée présente une viscosité de 400 à 1000 mPa·s/293°K.